# EUROPÄISCHE PATENTANMELDUNG

(11) **EP 1 777 643 A1**
(43) Veröffentlichungstag der Anmeldung: **25.04.2007**
(21) Anmeldenummer: 05768111.6
(22) Anmeldetag: 11.07.2005
(51) Int. Cl.: G06K 9/46

(54) **VERFAHREN ZUM AUTOMATISCHEN ERKENNEN EINES GESICHTS IN EINEM ELEKTRONISCH DIGITALISIERTEN BILD**

(30) Priorität: 04.08.2004 KZ 041132
(71) Anmelder: Kulenov, Daulet, Amalty 050046 (KZ); Lobanov, Alexandr, Amalty 050053 (KZ)
(72) Erfinder: KULENOV, Daulet, Almaty, 050046 (KZ); LOBANOV, Alexandr, Almaty, 050053 (KZ); CHA, Valery, Almaty, 050036 (KZ)
(74) Vertreter: Jeck, Anton
(86) Internationale Anmeldenummer: PCT/KZ2005/000004
(87) Internationale Veröffentlichungsnummer: WO 2006/014096

(57) **Zusammenfassung**

Die Erfindung stellt ein der Verfahren zur Erkennung von Bildern durch Feststellung der Bildeinzelheiten oder -merkmale dar und lässt sich für die automatische Erkennung eines Gesicht auf einem elektronischen, digitalisierten Bild anwenden, das mit einer Digitalkamera oder Fotokamera unter realen, insbesondere nicht kontrollierten Filmbedingungen aufgenommen wurde. Dieses Verfahren der automatischen Gesichtserkennung wird in zwei Schritten vorgenommen. Im ersten Schritt wird die wahrscheinlichste Lage des Kopfs festgestellt. Dazu wird eine Filterung in Richtung der oberen Teile der Kopfkontur durchgeführt. Dann werden diese Teile durch die Eigenschaften anderer Konturteile, der Schulter, der lateralen Seiten, der Augen, festgestellt. Nach der Bestimmung der wahrscheinlichsten Lagen des Kopfs werden die Muster der Kopfkontur in der Umgebung des Kopfs gesucht. Danach werden diese Muster verstärkt und mittels eines PCA- und DA-Verfahrens geprüft. Auf diese Weise werden eine hohe Zuverlässigkeit der automatischen Gesichtserkennung in Realzeit und eine hohe Suchgeschwindigkeit der präzisen Lage der Augen auf dem Bild erzielt.

## Beschreibung

Die Erfindung stellt ein Verfahren zur Erkennung von Objekten mittels der Ermittlung der Elemente oder Charakteristiken des Objektbilds dar und wird für die automatische Erkennung eines Gesicht auf einem elektronischen, digitalisierten Bild angewendet, das von einer Digitalkamera oder einer Fotokamera unter realen, besonders nicht kontrollierten Aufnahmebedingungen aufgenommen wird.

Eine schnelle, sichere und präzise, automatische Erkennung des Gesichts und dessen Elemente, und zwar der Augen, des Munds, der Nase usw., auf einem Bild, das unter unkontrollierten Bedingungen bezüglich der Beleuchtung, Entfernung bis zum Objekt, des Typs der angewendeten Geräte, der vorhandenen oder nicht vorhandenen Geräusche und Störungen, die die Gesichtselemente verzerren, und zwar die Brille, der Bart, die Haare usw., aufgenommen wird, ist eine der wichtigsten Aufgaben der Anfangsbearbeitung der Bilder und dient als notwendige Grundlage zur erfolgreichen Erfüllung der weiteren Datenumsetzung, die zum Vergleich oder Identifizieren von Personen dient.

Heutzutage gibt es viele Verfahren zur Lösung dieser wichtigen und komplizierten Aufgabe. Es sind folgende zu erwähnen: Verfahren, die auf dem Verfahren von Grundkomponenten basieren (Principle Component Analysis = PCA), Verfahren der Gesichtsschablonenanwendung und Verfahren, die Neuronnetze benutzen. Jedes dieser Verfahren hat eigene Vor- und Nachteile.

Bekannt ist ein Verfahren des statistischen Lernens zur Erkennung von Objekten auf einem Bild (B. Moghaddam, A. Pentland, "Probabilistic Visual Leaming for Object Detection", IEEE, Jun. 20-23, 1995, S. 786-793), bei dem das PCA-Verfahren für die Suche der Gesichtselemente auf einem Bild angewendet wird. Das Verfahren basiert auf der Berechnung der Eigenvektoren und Eigenzahlen aus der Kovarianzmatrix der vorgegebenen Bildermenge. Es ist bekannt, dass die Eigenvektoren in diesem System eine orthonormierte Menge bilden. Die Zerlegung in einzelne Vektoren führt zu einer bedeutenden Datenkomprimierung. Auf Grund der Bilderdarstellung in dieser Art werden Erkennungsverfahren entwickelt, die in ihrer Robustheit die Verfahren übertreffen, die Schablonen und eine normierte Korrelation anwenden.

Aber die durchgeführten Experimente haben nachgewiesen, dass die Anwendung dieses Verfahrens sogar bei einem kleinen Suchbereich und bei der Anwendung einer durchschnittlichen Menge der Zerlegungskoeffizienten (ca. 100) einen hohen Kalkulations- und Zeitaufwand bedingt und für die Bearbeitung der Bilder in realer Zeit unanwendbar ist. Außerdem ist das Verfahren gegen eine Verzerrung einzelner Gesichtselemente (Brille mit Lichtreflexen) empfindlich.

Bekannt ist auch ein Verfahren zur Gesichtserkennung auf einem Digitalbild (US-Patent Nr. 6128397, KI. G06K9/00, 2000), das Nervennnetze (neural networks) anwendet. Das Verfahren besteht aus zwei Etappen. In der ersten wird der Drehwinkel mittels der Nervennnetze bestimmt, die unterschiedliche Umdrehungen des Gesichts erkennen. In der zweiten Etappe wird das Bild auf einen bestimmten Winkel umgedreht und auf die Anwesenheit des Gesichts mittels anderer Nervennetze geprüft, die Gesichter und Nicht-Gesichter erkennen können. Es ist aber auch festgestellt worden, dass die Verfahren, die Nervennetze anwenden, einen hohen Zeitaufwand erfordern, so dass die Lösung der Aufgaben in realer Zeit verhindert wird. Es ist auch zu betonen, dass der Lernprozess, der Prozess der Musterauswahl und die Auswahl des Nervennetzmodells äußerst kompliziert und nicht eindeutig sind.

Der vorliegenden Erfindung steht das Verfahren der Gesichtserkennung mittels Schablonen (US-Patent Nr. 5835616, Kl. G06K9/00, 1994) am nächsten. Es wird in zwei Etappen realisiert. In der ersten Etappe werden Prozeduren der Vorfilterung durchgeführt; sie bestehen aus der Verbesserung der Bildqualität mittels ausgleichender Filter und Filter der Bildrändererkennung und der nachfolgenden Filterung der Konturen, die zu den Gesichtselementen gehören: dem Oval, den Augen, dem Mund usw. Die zweite Etappe besteht aus der Suche und Bestätigung der Gesichtselemente durch die Prüfung dieser Elemente auf Übereinstimmung mit entsprechenden Schablonen (Active Contours Models = ACM)(M. Kass, A. Witkin and D. Terzopolous, "Snakes: Active Contours Models", International Journal of Computer Vision, 1988, S. 321-331). Die Erkennung des Kopfbereichs wird in einer separaten Etappe nicht abgesondert. Daher ist dieses Verfahren meistens für Bilder anwendbar, bei denen das Gesicht einen wesentlichen Bereich auf dem Bild nimmt und eine gute Qualität aufweist. Bei der Anwendung dieses Verfahrens für die Bilder, die bei den unkontrollierten Bedingungen bezüglich der Entfernung, Beleuchtung, des Außenraums usw. aufgenommen wurden, ergibt sich eine Mehrzahl von falschen Antworten.

Die Analyse aller oben erwähnten Verfahren weist daraufhin, dass sie in der Realzeit nur für solche Aufgaben, bei denen die Bereiche der vermutlichen Lage des Gesichts und dessen Elemente schon identifiziert sind, oder bei denjenigen Bildern anwendbar sind, bei denen das Gesicht einen wesentlichen Bereich nimmt. In den übrigen Fällen ist der Zeitaufwand für die Gesichtserkennung unannehmbar hoch.

Die Aufgabe der vorliegenden Erfindung besteht darin, ein Verfahren zur automatischen Erkennung eines Gesichts auf einem elektronischen, digitalisierten Bild zu schaffen, bei dem die Datensicherung in Realzeit erhöht ist.

Diese Aufgabe wird dadurch gelöst, dass das Verfahren in zwei Etappen realisiert wird. In der ersten Etappe werden Prozeduren der Vorfilterung durchgeführt, die aus der Verbesserung der Bildqualität mittels ausgleichender Filter und der Filter zur Erkennung von Bildgrenzen und der nachfolgenden Konturenfilterung bestehen, die zu den Gesichtselementen gehören: dem Oval, den Augen, dem Mund usw. In der zweiten Etappe werden diese Elemente gesucht und mittels einer Prüfung der statistischen Zusammenhänge und der Korrelationen dazwischen bestätigt. Es ist zu betonen, dass sich die Prozeduren, deren Begründung und Realisation voneinander stark unterscheiden. So wird beispielsweise die Suche und Bestätigung der Gesichtselemente nach dem Verfahren der Diskriminanzanalyse (Discriminant Analysis = DA) und dem PCA-Verfahren durchgeführt. Ferner wird am Anfang der ersten Etappe eine separate Prozedur zur Aussonderung und Entdeckung der wahrscheinlichsten Lage des Kopfs auf dem Bild mittels des Modells der Gesichtskontur realisiert, wodurch eine wesentliche Verringerung des Suchbereichs und Zeiteinsparung bei der Suche nach den Gesichtselementen erzielt wird; ebenfalls wird der Einfluss der Umfeldgeräusche vermindert.

Diese Art der Bildanalyse erhöht wesentlich die Wirksamkeit der Gesichtserkennung auf dem Bild und verringert die Suchzeit, so das Verfahren gemäß der Erfindung für die Lösung der Aufgabe in Realzeit geeignet ist.

### Kurzbeschreibung der Zeichnungen

Die Erfindung wird nun anhand der beigefügten Bilder näher erläutert. Es zeigen:

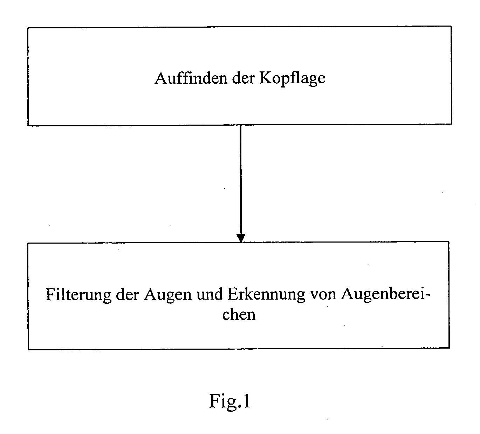

- Fig. 1: einen allgemeinen Blockplan des Verfahrens gemäß der Erfindung,
- Fig. 2: einen Blockplan für die Kopferkennung,
- Fig. 3: einen Blockplan für die Augenerkennung,
- Fig. 4: ein im Verfahren gemäß der Erfindung verwendetes, grobes Modell der Kopfkontur mit
1 a Kontur der linken oberen Hälfte,
1 b Kontur der rechten oberen Hälfte,
2a Kontur der linken Seite,
2b Kontur der rechten Seite,
3a Kontur der linken Schulter und
3b Kontur der rechten Schulter,
- Fig. 5: ein Gesichtsmodell mit
1 ellipsenförmiger Kopfkontur,
2a linkem Auge,
2b rechtem Auge,
3a linker Augenbraue,
3b rechter Augenbraue,
4 Nase und
5 Mund,
- Fig. 6: ein reales Bild, das geladen von einer Kamera geladen ist, Größe 640x480 Pixel,
- Fig. 7: dasselbe Bild wie die Fig. 6, aber 16-fach verkleinert, Größe 40x12 Pixel, wobei auf dem Bild mit dieser Auflösung das Gesicht gesucht wird und der gefundene Kopfbereich mit einer weißen Linie bezeichnet ist,
- Figuren 8-13: die Ergebnisse der Reihenfilterung der oberen Kopfkonturen und der Erkennung der weiteren Konturen- und Gesichtselemente: die lateralen Seiten des Kopfs, die vermutlichen Augen, wobei helle Punkte die wahrscheinlichen, linken Teile der Kontur und die dunklen Punkte die rechten Teile der Kontur zeigen,
- Fig. 14: die bewertete Summe der Vorfilterergebnisse zur Aussonderung der Kopfkonturelemente,
- Fig.15: die wahrscheinlichen Lagen des Kopfs sind auf dem Bild mit weißen Linie bezeichnet,
- Fig.16: das Ergebnis der Anwendung der Kopfmustermaske an den Stellen der Entdeckung von wahrscheinlichen Kopfgestalten,
- Fig. 17: das Ergebnis der Anwendung der Niederfrequenzfilter am Beispiel des Bilds, das in Fig. 16 gezeigt ist, wobei das Maximum gesucht, das die Mitte des oberen Kopfteils zeigt, und die Breite nach den Ergebnissen der Filterung mittels der Kopfkonturmasken festgestellt wird und wobei ferner die Lage des oberen Kopfteils mit der weißen Linie in Fig. 7 bezeichnet ist,
- Fig. 18: den ausgeschnittenen Gesichtsbereich, wobei die Augen gesucht werden und die Auflösung viermal geringer als am Ausgangsbild ist,
- Fig. 19: das Ergebnis der Filteranwendung zur Verschärfung der Gesichtselemente in Fig.14, wobei helle Punkte die Gesichtselemente bezeichnen,
- Fig. 20: das Ergebnis der Filteranwendung zur Erkennung der vertikalen Gesichtsseiten, wobei helle Linie die linke Gesichtsseite und die dunklen Linien die rechte Gesichtsseite bezeichnen,
- Figuren 21 und 22: die Ergebnisse der Erkennung des linken bzw. des rechten Auges, die die Suchergebnisse nach den anderen Gesichtselementen benutzen: Mund, Kinn und Konturen des oberen Kopfteils,
- Figuren 23 und 24: die Ergebnisse der nachfolgenden Filterung, wobei für die Erkennung der Augen das PCA-Verfahren angewendet wird,
- Fig. 25: die Lage des linken und rechten Auges auf dem ausgeschnittenen Bild,
- Fig. 26: das Ergebnis der Filterung auf Grund der Feststellung der äußeren und inneren Augenränder,
- Fig. 27: das Ergebnis nach der Anwendung des Filters des linken Auges aufgrund der DA,
- Fig. 28: das Ergebnis nach der Anwendung des Filters des rechten Auges aufgrund der DA und
- Fig. 29: das Ergebnis der Präzisierung der Lage des linken und rechten Auges auf dem ausgeschnittenen Bild.

Die Erfindung wird in zwei Etappen realisiert.

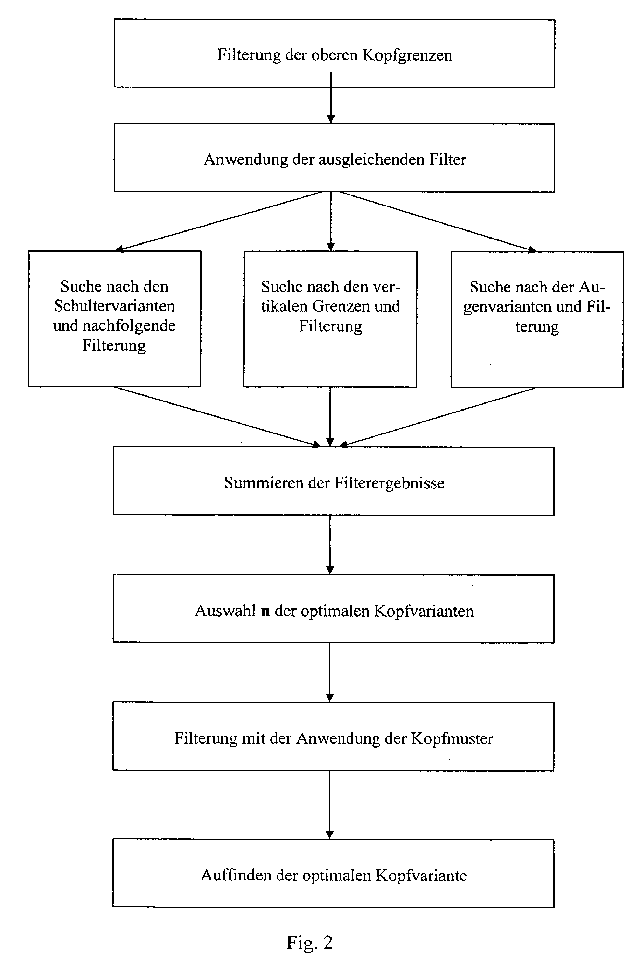

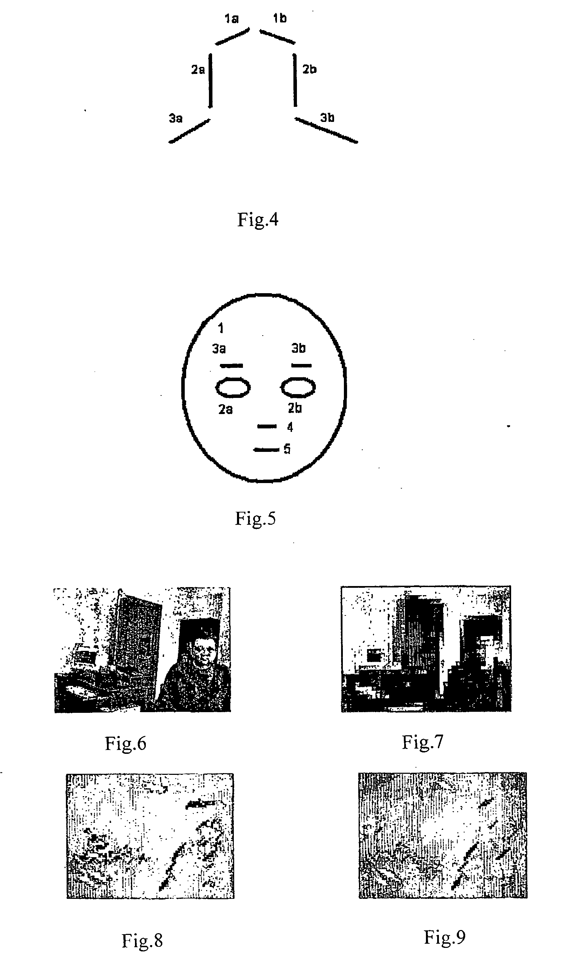

Die Bestimmung und Erkennung der wahrscheinlichsten Lage des Kopfs auf dem Bild erfolgt in der ersten Etappe (Fig.2) folgendermaßen. Es wird eine Pyramide der Bilder durch die konsequente Abgleichung des Ausgangsbilds aufgebaut. Die Pyramide der Bilder ist eine Reihe von Bildern mit einer schrittweise verringerten Auflösung 2-, 4-fach usw. im Vergleich zum Ausgangsbild. In Fig. 6 ist das Ausgangsbild mit 640x480 Pixeln dargestellt. In Fig. 7 ist eines der Bilder in der Pyramide dargestellt. Auf dem Bild mit der minimalen Auflösung werden die Differenzen vertikal und horizontal nach dem Sobeloperator berechnet. Danach wird die Filterung in den entsprechenden Richtungen zur Erkennung der linken, oberen und rechten, oberen Teile der Kopfkontur durchgeführt. Die Filterung in der Richtung identifiziert Punkte, in denen Reliefe in der Richtung, die orthogonal zur Richtung der Filterung liegt, maximal ähnlich sind. Das Ergebnis der Filterung des Ausgangsbilds (Fig. 6) ist in Fig. 8 dargestellt. Die dunklen Punkte auf diesen Bildern zeigen die linken Teile der Kopfkontur, während die hellen Punkte die rechten Teile zeigen.

Das Ergebnis der durchgeführten Filterung wird mittels der ausgleichenden Filter in den entsprechenden Richtungen und mittels der angegebenen Schwellen transformiert. Das Ergebnis dieser Transformationen ist in Fig. 9 dargestellt.

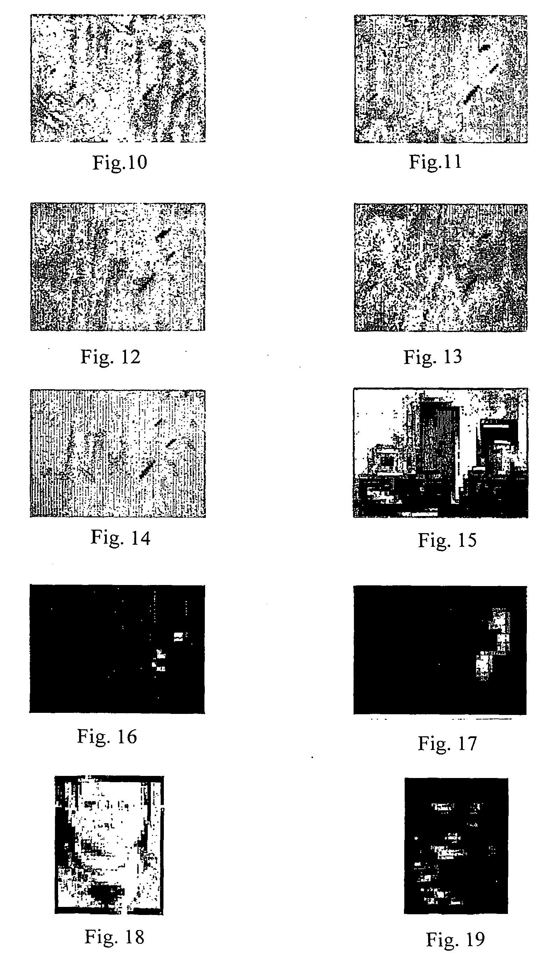

Danach werden die Filter angewendet, die die oberen, lateralen Seiten der Kopfkontur in der fortlaufenden Suche der Gesichtselemente identifizieren: der wahrscheinliche Varianten der Augen, der lateralen Seiten und Schultern und des Kinns, deren gegenseitige Lage bestimmten, statistischen Gesetzmäßigkeiten entsprechen. Die Filterung wendet folgendes Prinzip an. Die Punkte, zu denen solche Elemente gefunden sind, werden verschärft; im entgegengesetzten Fall werden sie gemildert. Das Model der Kopfkontur ist in Fig.4 dargestellt. Die Ergebnisse der Filteranwendung sind in den Figuren 10-13 abgebildet.

Die Ergebnisse der Filteranwendung zur Erkennung des oberen, linken und oberen, rechten Fragments der Kopfkontur werden mit den durch Versuche bestimmten Koeffizienten summiert und als Endbild wie in Fig. 14 dargestellt. Darauf werden die wahrscheinlichsten Kopflagen gesucht. Die Suchergebnisse sind die Koordinaten des oberen, linken und oberen, rechten Teils der Kopfkontur. Die wahrscheinlichen Kopflagen sind in Fig.15 mit weißen Strichen bezeichnet. In demjenigen Fall, in dem keine wahrscheinlichen Varianten des Kopfs gefunden worden sind, wird der Prozess abgebrochen, und das nächste, eingehende Bild wird bearbeitet.

Im Bereich der wahrscheinlichsten Kopflage wird eine weitere Filterung durchgeführt. Dabei werden die vorher aufgebauten Muster der Kopfkontur angewendet. Als Modell der Kopfkontur wird eine Ellipse mit variablen Werten der Weite und Höhe in einem bestimmten Wertebereich angenommen. In Fig. 16 ist das Ergebnis der Anwendung dieses Filters dargestellt. Das gewonnene Bild wird weiter mit dem Endbild (Fig. 14) summiert und ausgeglichen. So wird das Gesamtbild (Fig. 17) gestaltet, worauf die wahrscheinlichste Kopflage festgestellt wird. In demjenigen Fall, in dem die Kopflage nicht identifiziert ist, wird der Prozess automatisch abgebrochen, und das nächste Bild wird bearbeitet.

In der ersten Etappe wird die wahrscheinlichste Kopflage festgestellt. Zu diesem Zweck erfolgt die Filterung in der Richtung der oberen Kopfkonturteile. Erst dann erfolgt die weitere Erkennung durch die Anwendung der Eigenschaften der anderen Konturteile: Schulter, laterale Seiten und Augen. Nach der Bestimmung der wahrscheinlichsten Kopflagen wird die Suche mittels der Kopfkonturschablonen in diesem Bereich gestartet.

Durch die Anwendung dieses Verfahrens werden der Bereich und die Zeit der Gesichtssuche vermindert, und die Sicherheit der Ergebnisse wird wesentlich erhöht.

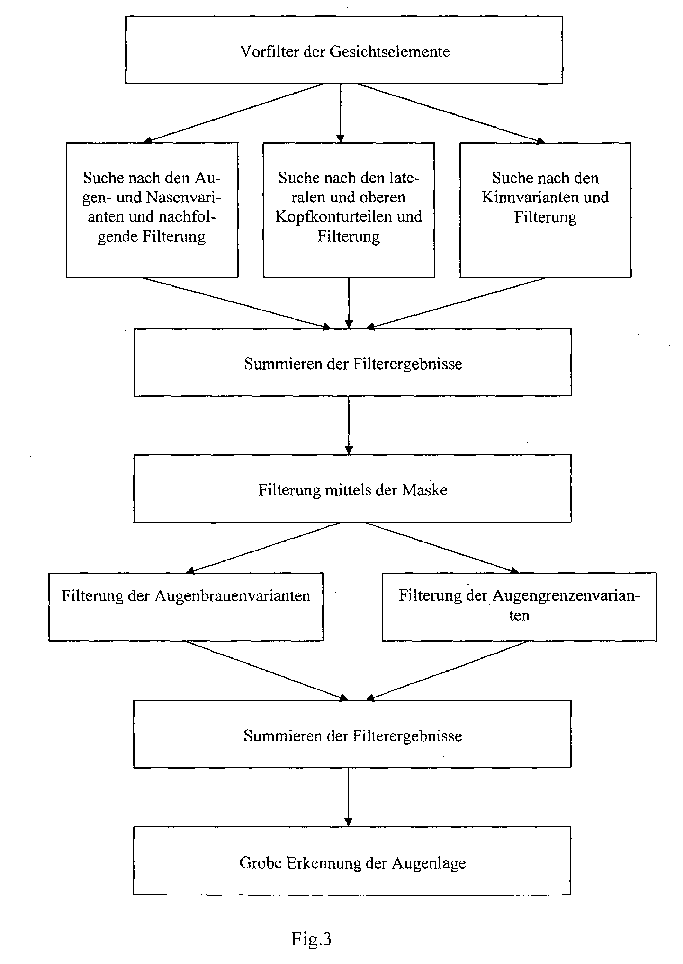

In der zweiten Etappe (Fig. 3) wird die Lage des linken und rechten Auges auf dem Bild gesucht, das aus dem Bereich der festgestellten Kopflage ausgeschnitten und auf das Bild mit der höheren Auflösung übertragen wird. Ein Beispiel des ausgeschnittenen Bilds ist in Fig.18 dargestellt.

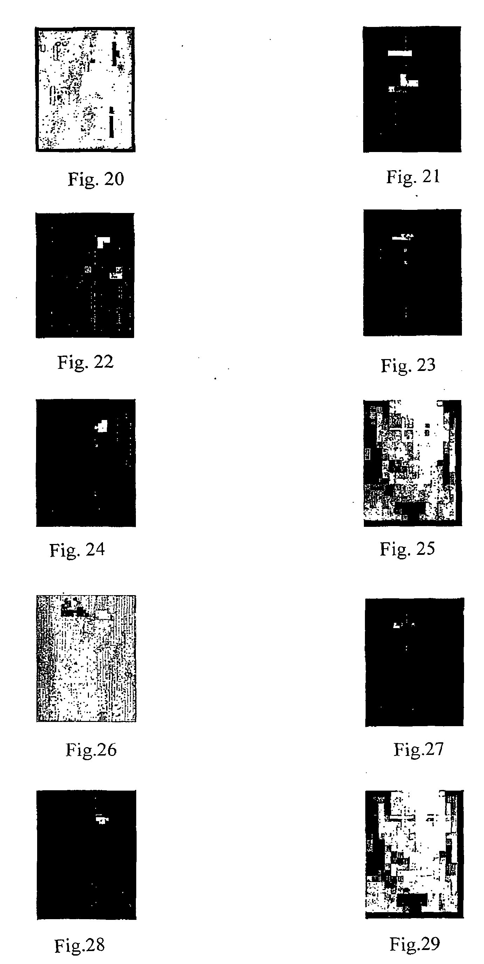

Die zweite Etappe besteht aus den folgenden Schritten. Mittels des Sobeloperators werden die Differenzen des Bilds horizontal und vertikal berechnet. Einige Gesichtselemente werden gefiltert: Augen, Mund, Nase, Kinn usw. Es werden die oberen und unteren Grenzen dieser Elemente gesucht und danach horizontal ausgeglichen. Das Ergebnis dieser Filterung ist in Fig.19 dargestellt. Die hellen Punkte auf dem Bild zeigen einige Gesichtselemente. Es erfolgt die Filterung zur Erkennung von vertikalen, lateralen Elementen der Gesichtskontur mittels der Anwendung von Sobel-Enddifferenzen in horizontaler Richtung und der ausgleichenden Filter in vertikaler Richtung. Das Ergebnis dieser Filterung ist in Fig. 20 dargestellt. Die hellen Linien darauf zeigen die vertikale, laterale Kontur der linken Gesichtsseite, während die dunklen Linien die Kontur der rechten Gesichtsseite zeigen.

Danach werden die Punkte gefiltert, die dem linken und rechten Auge entsprechen, und zwar durch die Suche des Munds, der Nase, des Kinns und der lateralen vertikalen und oberen Teile der Gesichtskontur. Die Punkte, zu denen die entsprechenden Gesichtelemente gefunden worden sind, und die den statistischen Gesichtsproportionen entsprechen, werden verschärft. Im entgegengesetzten Fall werden diese Punkte gemildert.

Die Ergebnisse der Filterung nach einzelnen Gesichtselementen werden mit den durch Versuche bestimmten Koeffizienten summiert. Die Endbilder zeigen die Bereiche der wahrscheinlichsten Lage des linken Auges (Fig. 21) und des rechten Auges (Fig. 22). Auf Grund der Bilddaten werden die Mengen der wahrscheinlichen Varianten des linken und rechten Auges aufgebaut.

Danach werden das linke Auge und rechte Auge unter Anwendung des PCA-Verfahrens gefiltert. Dazu wird ein Lernprozess zur Berechnung der Eigenvektoren und Eigenzahlen der Kovarianzmatrix mittels der umfassenden Gesichtsauswahl aufgebaut. Es ist bekannt, dass Eigenvektoren eine orthogonale Basis bilden, wodurch die Koeffizienten der orthogonalen Zerlegung für den mittleren Vektor der Gesichtsauswahl berechnet werden. Die Koeffizienten der Zerlegung werden in entsprechende Eigenzahlen geteilt. So ist das mittlere Gesicht der Auswahl in Form eines Vektors h der Zerlegungskoeffizienten in der orthogonalen Basis dargestellt.

Der Prozess der Augenfilterung lässt sich folgenderweise erläutern. Für das Eingangsbild, das als eindimensionaler Vektor dargestellt ist, werden die Koeffizienten der orthogonalen Zerlegung berechnet, die in entsprechende Eigenzahlen geteilt werden. Danach wird der Korrelationsnormalkoeffizient des gewonnenen Vektors relativ zum Vektor h berechnet, der zeigt, inwieweit dieses Bild dem mittleren Gesicht aus der Auswahl ähnlich ist. Der Filter wird an alle Varianten des linken und rechten Auges angewendet. Das Ergebnis der Filterung für das linke Auge ist in Fig. 23 und für das rechte Auge in Fig. 24 dargestellt. Der Filterungsgrad lässt sich durch den Vergleich der Bilder auf den Figuren 21 und 23 bzw. Figuren 22 und 24 einschätzen. Entsprechend den Ergebnissen der Filterung werden unter den Augenvarianten die Lagen des linken und rechten Auges festgestellt, s. Fig. 25. Die Lagen der Augen sind mit weißen Kreuzen bezeichnet.

Die Bereiche des linken und rechten Auges werden auf das Bild mit der höheren Auflösung übertragen. Darauf werden die horizontalen und vertikalen Endableitungen nach den Sobeloperatoren berechnet. Für jeden Punkt im Bereich werden die Bedingungen für das Auffinden von gewölbten Grenzen um den Punkt herum geprüft, d.h., ob auf bestimmtem Bereichen um diesen Punkt herum Punkte mit dem Wert und der Richtung des Gradienten innerhalb der angegebenen Intervalle vorhanden sind. Fig. 26 zeigt das Ergebnis dieser Filterung. Die dunklen Punkte zeigen das linke Auge, während die hellen Punkte das rechte Auge zeigen.

Für die weitere Präzisierung der Augenmittelage wird das Verfahren der Diskriminanzanalyse (DA) angewendet. Der typische Fehler bei der Bestimmung der Augenlage ist die Unterbringung der Augenmitte an die Ränder der Augen oder an die Augenbrauen. Zur Vermeidung solcher Fehler wird die Abbildung der Augenbraue oder Augenränder als eine der Mengen in den Lernprozess nach dem DA- Verfahren eingeschlossen, und die Abbildung der Augen stellt eine andere Menge dar. So werden zuerst die Klassen "Auge" und "Augenrand", dann die Klassen "Auge" und "Augenbraue" gefiltert. Das Ergebnis der Filterung wird mit den durch Versuche bestimmten Koeffizienten summiert. In den Figuren 27 und 28 sind die Ergebnisse dieser Transformation des linken bzw. rechten Auges dargestellt.

Durch die Anwendung der Ergebnisse aus den vorgenommenen Prozeduren wird die Mitte des linken und rechten Auges bestimmt (Fig. 29). So werden nach der Erkennung der Augen diese zuerst nach deren Eigenschaften und Eigenschaften anderer Gesichtselemente gefiltert. Erst dann werden sie verschärft und durch die Anwendung des PCA-Verfahrens und des DA-Verfahrens bestätigt. So wird die Zuverlässigkeit und hohe Geschwindigkeit der Suche nach der Augenmitte gesichert.

Die nötige Erfindungshöhe ist dadurch gegeben, dass die Kopfkontur nicht als eine Einheit durch die Anwendung der Muster (üblich wird eine Ellipse als Muster angewendet), sondern schrittweise gesucht wird, wobei die Elemente der Kopfkontur schrittweise erkannt und durch die Anwendung der statistischen Verhältnisse dazwischen gefiltert werden, so dass der Kalkulations- und Zeitaufwand wesentlich vermindert und die Zuverlässigkeit der Suche erhöht wird.

Mit dem Verfahren lassen sich 4-5 Bilder pro Sekunde bearbeiten, und ein hoher Grad an Zuverlässigkeit der Gesichtserkennung lässt sich auf einem elektronischen, digitalisierten Bild einhalten.

## Patentansprüche

1. Verfahren zur automatischen Erkennung eines Gesichts auf einem elektronischen, digitalisierten Bild,
**dadurch gekennzeichnet,**
**dass** es in zwei Etappen realisiert wird, und zwar in einer ersten Etappe, in der eine Vorfilterung durchgeführt wird, die aus einer Verbesserung der Bildqualität mittels ausgleichender Filter und Filter zur Erkennung der Bildränder und einer nachfolgenden Konturenfilterung der wahrscheinlichen Gesichtselementen, des Ovals, der Augen, des Mundes usw. besteht, und in einer nächsten Etappe, in der Gesichtselemente gesucht und mittels einer Prüfung der statistischen Proportionen dazwischen bestätigt werden, wobei der Suchbereich des Gesichts vorher eingeschränkt wird, indem der Bereich der Kopflage bestimmt wird, und wobei der Bereich der Kopflage durch die Vorfilterung der oberen Kopfkonturfragmenten und die Suche der wahrscheinlichsten Varianten von anderen Kopfkonturfragmenten bestimmt wird, nämlich der lateralen Seiten, der Augen, der Schulter, durch die Prüfung der statistischen Proportionen dazwischen und die nachfolgende Suche in Bereichen der wahrscheinlichsten Lage mittels Schablonen des Kopfkonturmodels.

2. Verfahren nach Anspruch 1,
**dadurch gekennzeichnet,**
**dass** die Gesichtselemente mittels der Filter zur Erkennung der horizontalen und vertikalen Grenzen im Bereich der gefundenen Kopflage vorgefiltert werden, um die Augenlage zu bestimmen.

3. Verfahren nach Anspruch 3,
**dadurch gekennzeichnet,**
**dass** der Augenbereich im Ergebnis der Suche nach den Varianten anderer Gesichtselemente, nämlich des Munds, des Kinns, der lateralen Gesichtsseiten und der Prüfung der statistischen Proportionen dazwischen verschärft wird.

4. Verfahren nach Anspruch 2 oder 3,
**dadurch gekennzeichnet,**
**dass** die Augenbereiche auf den Bildern mit niedriger Auflösung mittels von PCA und DA abgeleiteter Verfahren gefiltert und bestätigt werden.

5. Verfahren nach Anspruch 4,
**dadurch gekennzeichnet,**
**dass** für die Anwendung des PCA-Verfahrens ein Lernprozess mittels einer umfassenden Gesichterauswahl mit dem Ziel realisiert wird, eine orthonormierte Basis der Eigenvektoren, Eigenzahlen aus der Kovarianzmatrix und Zerlegungskoeffizienten des mittleren Gesichts in der Auswahl nach der orthogonalen Basis festzustellen, wobei der Ähnlichkeitsgrad mit dem mittleren Gesicht durch die Berechnung des Vektors festgestellt wird, der aus den Koeffizienten der orthogonalen Zerlegung, des normierten Korrelationskoeffizienten dieses Vektors und des Vektors der Koeffizienten für das mittlere Gesicht besteht und die Filterung der Augen durch eine Darstellung unterschiedlicher Varianten der Augen und eine Berechnung der entsprechenden Korrelationskoeffizienten realisiert und ferner im Bereich der wahrscheinlichsten Augenlage eine Filterung zur Identifizierung der Punkte, die in den Bereichen mit gewölbten Rändern liegen, durchgeführt wird.

6. Verfahren nach Anspruch 4,
**dadurch gekennzeichnet,**
**dass** für das DA-Verfahren vorher ein Lernprozess mittels der umfassenden Gesichterauswahl mit dem Ziel realisiert wird, die Punkte, die in Bereichen der Augenbrauen und Augenränder liegen, zu unterdrücken und die präzise Lage der Augenmitte zu bestimmen, wobei die Augenbereiche gefiltert und gleichzeitig die Punkte, die in der Bereichen der Augenbrauen und Augenrändern liegen, entfernt werden.

7. Verfahren nach Anspruch 5,
**dadurch gekennzeichnet,**
**dass** gemäß dem DA-Verfahren eine vorläufige Erfassung der Personen mit dem Ziel der Unterdrückung der Punkte erfolgt, die sich auf den Bereich der Augenbrauen sowie der Ränder der Augen beziehen, und dass die Filtrierung der Augen aufeinander erfolgt, in dem die Punkte, die in den Bereich der Augenbrauen sowie der Augenränder fallen, entfernt werden.
